Europäisches Patentamt

European Patent Office

Office européen des brevets

(11) Publication number: **0 102 965**
**B1**

# EUROPEAN PATENT SPECIFICATION

(45) Date of publication of patent specification: **17.09.86**

(51) Int. Cl.⁴: **H 04 N 5/14, H 03 H 17/06**

(21) Application number: **83900641.8**

(22) Date of filing: **31.01.83**

(86) International application number:
**PCT/GB83/00022**

(87) International publication number:
**WO 83/02704 04.08.83 Gazette 83/18**

(54) A FILTER FOR EXTENDING THE DIFINITION OF A TELEVISION SIGNAL IN COMPONENT FORM.

(30) Priority: **29.01.82 GB 8202622**

(43) Date of publication of application:
**21.03.84 Bulletin 84/12**

(45) Publication of the grant of the patent:
**17.09.86 Bulletin 86/38**

(84) Designated Contracting States:
**DE FR GB NL**

(56) References cited:
**EP-A-0 022 642**

(73) Proprietor: **INDEPENDENT BROADCASTING AUTHORITY**
**70 Brompton Road**
**London SW3 1EY (GB)**

(72) Inventor: **TONGE, Gary James**
**38 Burley Road Harestock**
**Winchester, S022 6QJ (GB)**

(74) Representative: **Crawford, Andrew Birkby et al**
**A.A. THORNTON & CO. Northumberland House**
**303-306 High Holborn**
**London WC1V 7LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a three dimensional transversal filter for extending the definition of a television video signal which is in component form. The transversal filter is a non-recursive filter in which the input signal is successively delayed and in which the output of the filter is formed by the summation of components obtained by weighting the variously delayed parts of the input signal.

The filter is preferably used for filtering a television signal to be transmitted and hence such a filter is also present in a receiver for such a television signal.

The present invention provides a three dimensional transversal non-recursive filter for filtering a television video signal in component form in which the input signal is successively delayed and in which the output of the filter is formed by the summation of components obtained by weighting the variously delayed parts of the input signal, characterised in that the filter structure has alternate co-efficients which are zero, the non-zero coefficients being in the form $k/_2n$ where k and n are integers, said co-efficients being used to weight the delayed parts of the input signal.

The filter structure is three-dimensional in that it has co-efficients which are situated over several fields and lines and horizontal samples of the sampled television video signal.

Features and advantages of the present invention will become apparent from the following description of an embodiment thereof given by way of example with reference to the accompanying drawings, in which:—

Figure 1 shows an example of a multiplexed analogue component signal which is used as the basis for describing the present invention;

Figure 2 shows in block diagram form a converter for converting the signal shown in Figure 1 for use with a television receiver;

Figure 3 shows a graph of repeat spectra due to sampling frequency;

Figure 4 shows graphs of pre- and post-sampling filters;

Figure 5 shows a line-interlace scan considered as a 2-dimensional sampling frequency;

Figure 6 shows a graph indicating alias free zones with separate vertical and temporal filters;

Figure 7 shows a graph similar to Figure 6 for combined vertical/temporal filtering;

Figure 8 shows a field-quincunx sample structure;

Figure 9 shows a graph of spatio-temporal resolution with 3-dimensional signal processing;

Figure 10 shows diagrammatically a filter lattice for 3-dimensional filtering;

Figure 11 shows a block diagram of the filter lattice shown in Figure 10; and

Figure 12 shows the horizontal/vertical and horizontal/temporal frequency responses for an example of the filter of Figure 10.

Before describing the invention, it is considered advisable to describe some basic considerations. We propose a signal which will improve on the quality of PAL in an FM channel and details of this proposal are given below.

PAL signals normally achieve about 3.8MHz of useful luminance bandwidth, 4.5MHz of 'clean' luminance bandwidth will be assumed as a figure which would represent an improvement (or at least comparability) with the performance of PAL, higher frequencies that 3.8MHz normally being impaired by cross-effects in typical decoders. Similarly, a figure of 1.3MHz will be assumed for the colour-difference channels, with a vertical resolution approaching half that of the luminance channel.

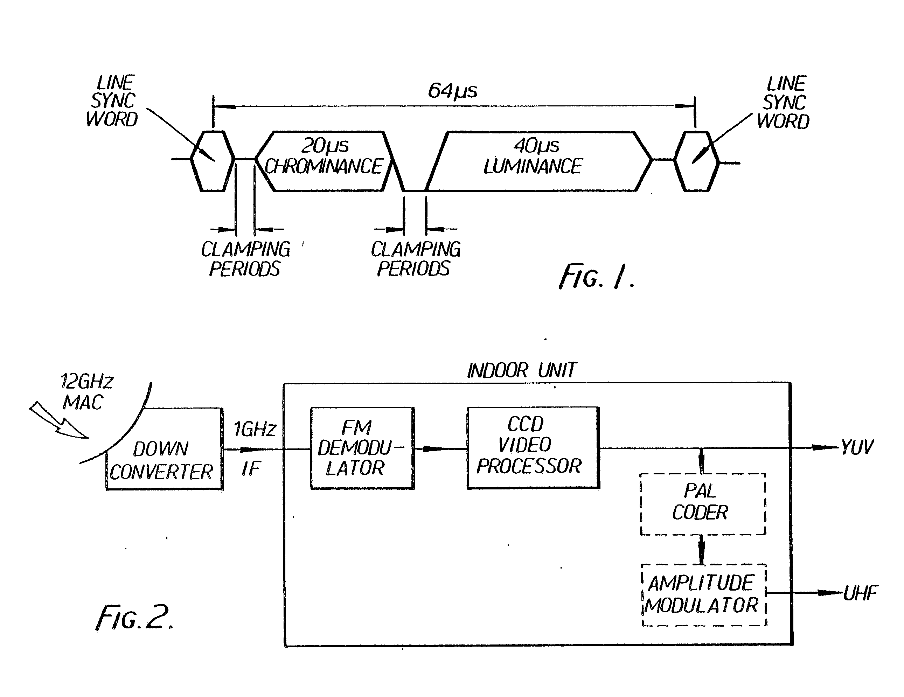

If each line of the luminance signal is compressed in time from 52 µs to 40 µs, say, the transmission bandwidth increases proportionally. A luminance signal limited to a bandwidth of 4.5MHz would then pass through a 5.8MHz channel in this time-compressed form. At least 20 µs of the line would be available for the colour-difference signals, allowing a sequential colour-difference transmission of 2.2MHz bandwidth (Figure 1). Filtering to 1.3MHz bandwidth would be applied in the receiver to improve S/N ratio. For a signal with this format, calculations show that the weighted S/N ratio in the colour channels would be improved by 5dB in comparison with pre-emphasised PAL (the luminance S/N ratio being virtually unchanged). In addition, cross-colour, cross-luminance and the effect of truncating the upper chrominance sideband would be eliminated. Moreover, the calculation does not account for the fact that the new signal has no high-frequency subcarrier, and probably would be less sensitive to distortion. Therefore, any inefficiency caused by the mismatch between the PAL signal and the FM noise spectrum mentioned in our report No. 116/81 issued in August 1981, together with the line-blanking period, provides sufficient margin to allow a separate-component transmission with improved S/N ratio. These factors alone would portend an improvement in the signal quality for a small-screen viewer without incurring significant costs in the home satellite converter. The converter would require a line-store for time decompression of the components signals as shown in Figure 2. However, further enhancements of resolution would be possible through additional signal processing. A compatible extension of resolution for large-screen applications will be described.

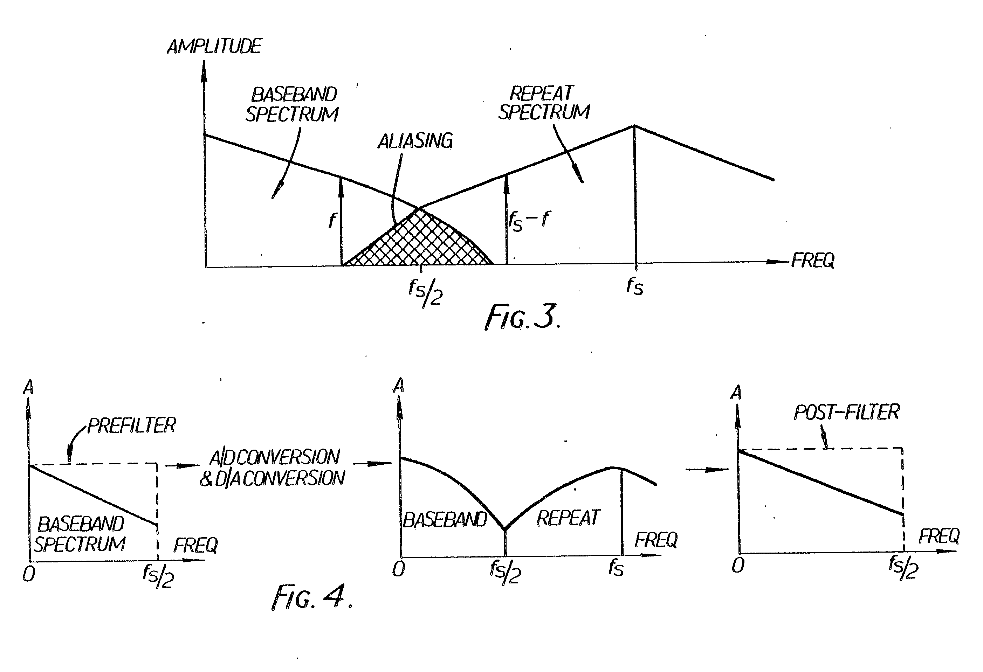

The analogue television signal represents a dynamic scene which has been sampled in two dimensions. It has been sampled vertically by the line structure, and temporally by the field structure. Any sampling process generates spurious spectral components which can give rise to aliasing impairment of the baseband spectrum through intermodulation with the sampling frequency. A frequency f produces an inter-modulation component $(f_s—f)$ where $f_s$ is the sampling frequency. This gives rise to a repeat of the baseband spectrum centred on the sample frequency $f_s$ in the manner shown in Figure 3.

To avoid aliasing, the baseband spectrum must be low-pass filtered to remove frequencies exceeding $f_s/2$. Moreover, a similar low-pass filter must be used after D/A conversion so that only the baseband spectrum is reproduced at the output (Figure 4).

Although the television scanning process samples the scene both vertically and temporally, no such pre-filtering or post-filtering has taken place. Consequently, television pictures are impaired by high vertical frequencies, and by high temporal frequencies. In particular, vertical frequencies exceeding $156\frac{1}{4}$ c/ph (cycles per picture height), or temporal frequencies exceeding $12\frac{1}{2}$ Hz tend to cause visible aliasing.

To remove these impairments, it is necessary to introduce a vertical/temporal pre-filter and post-filter. It is only when we consider the necessary characteristics of these filters that we see the potential for increasing the vertical and temporal resolution.

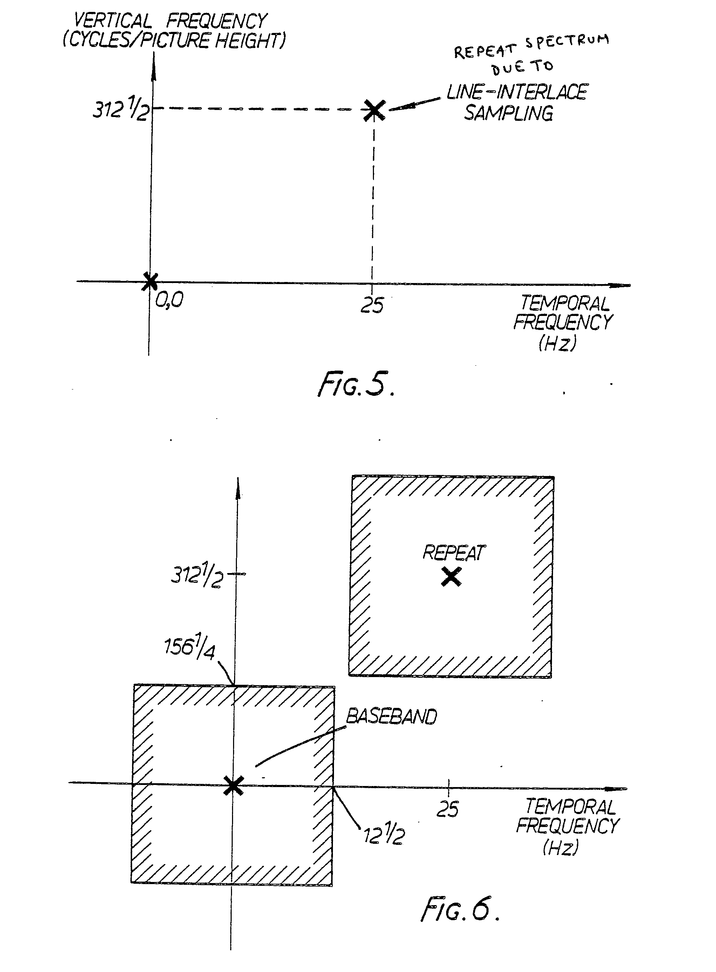

The line-interlace structure, considered as a sampling frequency, must be treated in two dimensions. The lines sample the scene vertically, but are also displaced along the temporal axis (i.e. between adjacent fields). Therefore we must introduce the concept of a two-dimensional frequency plan as shown in Figure 5. The interlaced line structure is represented by a point in this plane at $312\frac{1}{2}$ cycles/picture height, and 25 Hz temporal frequency.

The baseband signal is centred on the point (0, 0) and is unrestricted in extent, except by the sampling aperture (that is, the spot-size and persistence), there being no pre-filter either vertically or temporally. As in the one-dimensional case, the effect of the sampling process is to introduce a repeat baseband spectrum on the site of the sampling frequency. Clearly, vertical frequencies exceeding $156\frac{1}{4}$ c/ph or temporal frequencies exceeding $12\frac{1}{2}$ Hz, could give rise to significant alias defects unless pre-filtering is applied. Even if suitable pre-filtering is employed, the repeat spectrum will be apparent in the display unless post-filtering is also applied—this is merely the visibility of the interlace line-structure familiar in all television pictures. The simplest arrangement for the removal of vertical and temporal aliasing would be to introduce separate filters in the vertical and temporal directions, as shown in Figure 6.

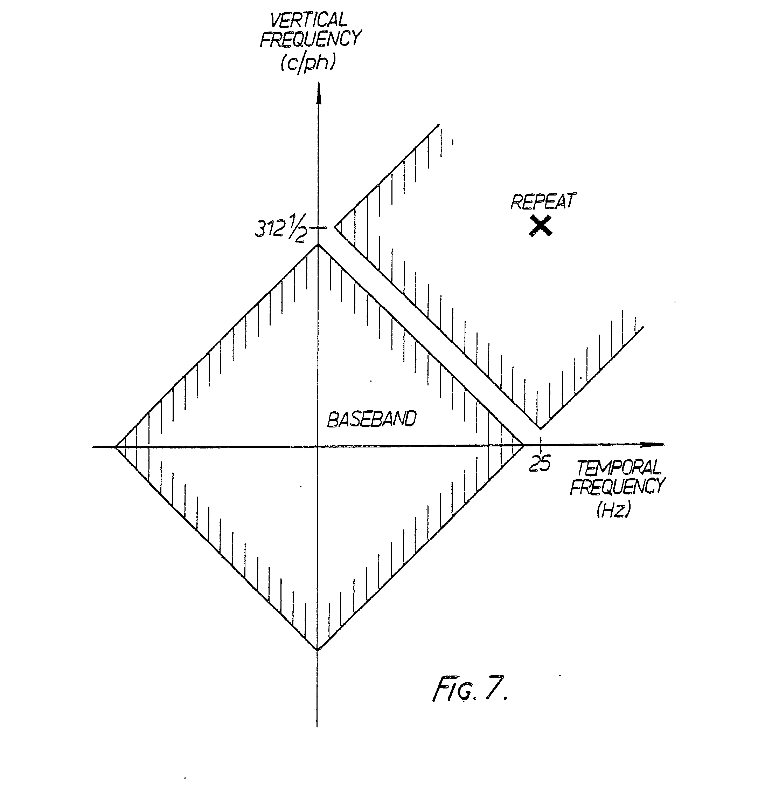

This would avoid the aliasing which arises from overlap between the baseband and repeat spectra. However, half the frequency space would then be wasted. Therefore, it is possible to double either the vertical or the temporal resolution without causing aliasing. Alternatively, a combined vertical/temporal filter can produce the result shown in Figure 7, in which a peak resolution of $312\frac{1}{2}$ c/ph and 25 Hz is achieved. This characteristic approximates that of the human eye which can perceive high spatial resolution only in static scenes. It is clear that a conventional line-interlace structure ($312\frac{1}{2}$ lines/field) can support a vertical resolution of $312\frac{1}{2}$ c/ph but does not do so if the scene is sampled directly with line-interlace scanning. Aliasing into the baseband region occurs during the scanning process and cannot be removed by subsequent filtering. Consequently, it is necessary to provide an initial scan which contains more lines (for example by doubling their number to 625 lines per field) so that aliasing into the baseband region is essentially avoided. This signal can then be pre-filtered (vertically and temporally) to remove those frequencies which cannot be carried by the $312\frac{1}{2}$-lines/field interlace signal. Alternate lines are then discarded to produce the conventional interlace signal, which then carries enhanced vertical/temporal resolution (without aliasing) as indicated in Figure 7.

This signal could be displayed on a conventional interlace monitor, which would then show improved aliasing characteristics. The line structure would remain visible however, due to the presence of the repeat spectrum at $312\frac{1}{2}$ c/ph/25 Hz. The full potential of the signal can be realised only if a post-filter is included prior to the display. The repeat spectrum is unavoidable in a $312\frac{1}{2}$-lines/field interlace display, but the post-filter has the effect of interpolating the lines which were originally dropped, so as to recreate the 625 lines/field signal. Indeed, it may be shown that the functions of post-filtering and line interpolation are mathematically equivalent. The procedure just described provides a transmission signal which may be viewed either on a conventional display, or with enhanced resolution by including the necessary filtering. It therefore represents a compatible extension to resolution, the costs of which are borne only by users who wish to pay for the improved picture quality.

The compatible enhancement of vertical resolution arose through an optimisation of the filters associated with the vertical sampling (scanning) of the scene. It is interesting to consider whether a similar enhancement can be achieved in the horizontal direction by deliberately introducing a horizontal sampling process where none was necessary. This question has been considered in some detail and it is found that an improved horizontal bandwidth can be achieved through a similar technique.

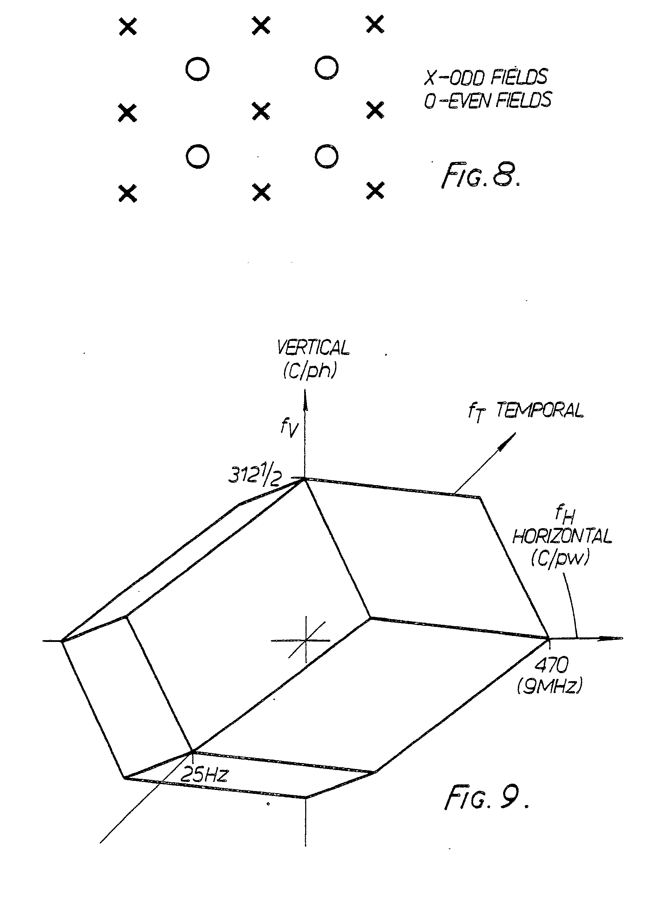

Suppose that a luminance signal is sampled at a frequency of, say, 9MHz, using the "field-quincunx" sample structure of Figure 8.

This sample structure must be analysed in three dimensions, the samples being displaced horizontally, vertically and temporally. Consequently, the repeat spectra generated by the sample structure occur in three dimensional frequency space.

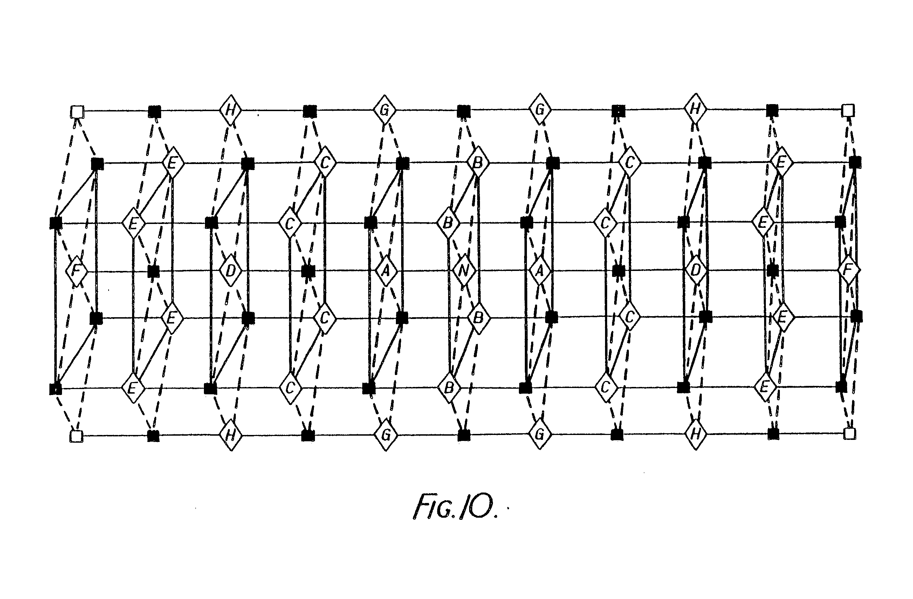

Suitable three-dimensional filtering can (in principle) then create an alias free (unity gain) region extending to 9MHz horizontally, $312\frac{1}{2}$ c/ph vertically and 25 Hz vertically, as shown in Figure 9. As in the two-dimensional case, the source coding must be a 625 lines/field sequential scan signal, with alternate lines being dropped after the pre-filtering process, thereby creating a compatible field interlace structure. The extended-definition receiver would include a similar post-filter/interpolator prior to a 625-line sequential display. When we consider that a PAL transmission typically achieves only 4MHz of horizontal resolution, a little over $156\frac{1}{4}$ c/ph vertically and $12\frac{1}{2}$ Hz temporally, and is impaired by aliasing, cross-colour and cross-luminance, there can be little doubt that such signals would be capable of large-screen display.

The sample impulses at a 9MHz rate can pass through an analogue Nyquist channel of 4.5MHz bandwidth without impairment, or through a 5.85MHz channel when time compressed from 52 µs to 40 µs per line. It is less than obvious that the technique also improves the spectral efficiency of the signal, or indeed that the extended definition arises directly as a result of this improvement. Conventional signals contain a series of gaps in the spectrum which carry only high-frequency diagonal information. When high-frequency diagonals are excluded, as in Figure 9 these gaps become available to carry more useful information. The effect of the 3-D sampling process described is to deliberately alias useful high-frequency information into these gaps. The original spectrum can then be truncated, in the safe knowledge that high frequencies are carried elsewhere in the signal. The post-filter/interpolator restores the folded energy to its rightful position at high frequency, thereby recreating the original spectrum.

We have now investigated the use of three-dimensional filters and have found that the sampling density (i.e. number of samples per unit space-time volume-defines a frequency volume which cannot be exceeded by the signal spectrum for error-free reconstruction. The particular arrangement of samples (the sampling lattice) restricts the choice for the shape of the approprate frequency volume. For a television system it would be sensible to define a frequency volume shape which matches the spatio-temporal frequency response of the eye, and to use a sampling arrangement which would efficiently support this frequency shape.

One of the most important properties of the eye's response is that the spatial bandwidth reduces with an increasing temporal frequency component. An efficient coding scheme for television signals would take account of this in defining the frequency volume (or "three-dimensional bandwidth") of the signal. Such a resolution exchange (i.e. a reduction of spatial resolution for moving pictures as compared with stationary pictures) would normally be expected to require "additive" (i.e. non-linear) techniques.

A class of linear filters has been designed which, achieve the required resolution exchange without non-linear distortion.

The filters have the following important properties:—

1. They operate on an interlaced video signal sampled orthogonally and enable down sampling by a factor of two, to a field-quincunx sampling arrangement.

2. They introduce no attenuation for purely vertical-temporal frequencies.

3. The horizontal resolution decreases as the temporal frequency component increases.

4. Alternate coefficients are zero. Typically an identical filter will be used as a post-filter to interpolate samples at the full orthogonal sampling rate. With this arrangement successive down-up sampling procedures can be performed without further degradation.

5. The non-zero coefficients are simple binary fractions, i.e. they take the form $k/2^n$ where k and n are integers. This greatly facilitates hardware implementation.

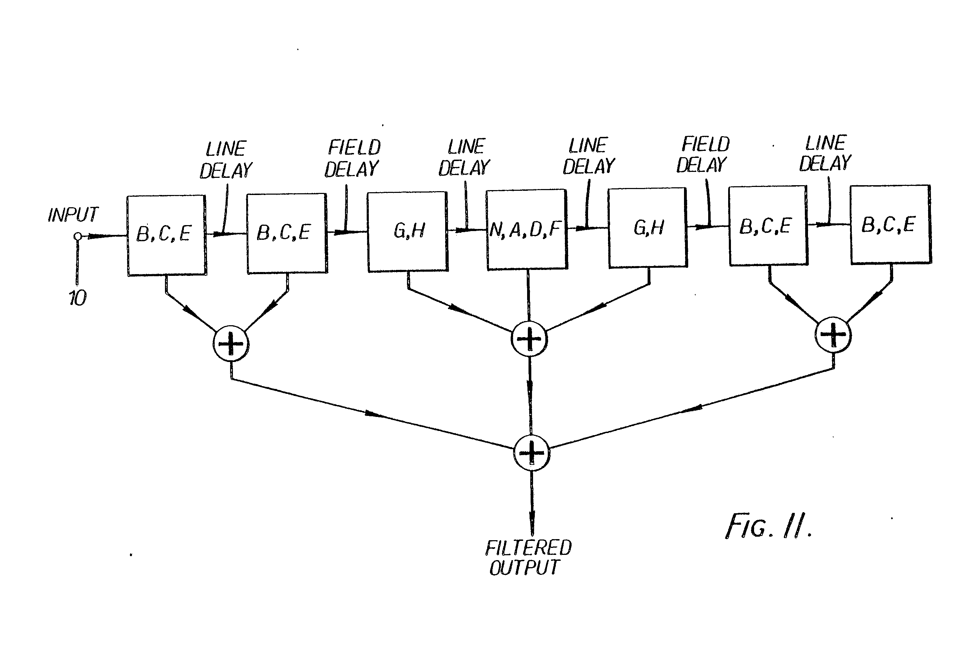

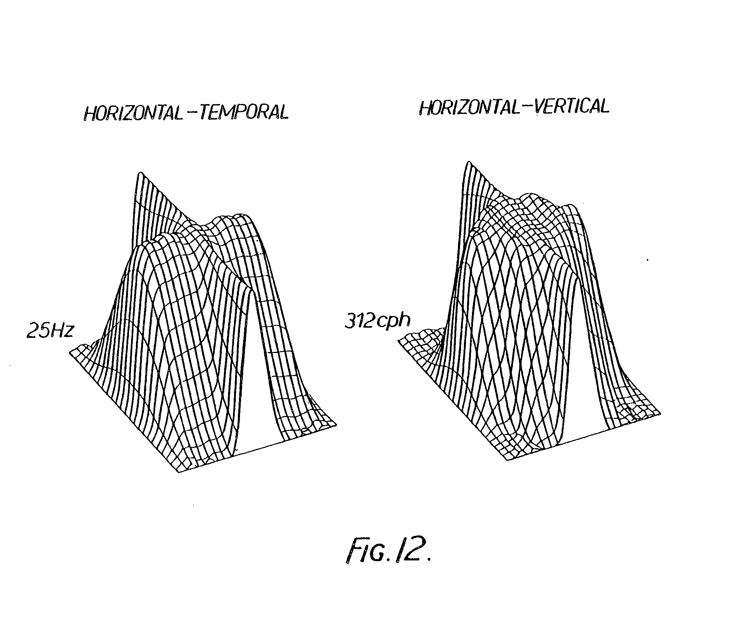

Examples of these filters have been implemented using a lattice of coefficient positions as illustrated in Figure 10, which spreads over 3 fields and five lines. A filter incorporating these coefficient positions can be implemented using four line delays and two field delays as illustrated in the block diagram of Figure 11. Each coefficient is obtained by tapping the delay sequence at the appropriate position and multiplying by the coefficient value. The filter response is then obtained by adding together these modified and delay signal components. Coefficient values for a typical filter are:—

$$N= \tfrac{1}{2}$$

$$A= 103/512$$

$$B= 43/512$$

$$C= -1/32$$

$$D= 7/256$$

$$e= -11/1024$$

$$F= 11/512$$

$$G= -13/512$$

$$H= 13/512$$

The horizontal-vertical response (i.e. the stationary picture response) and the horizontaltemporal response are shown for a filter with these coefficient values in Figure 12.

The filter described above may be used with television signals using the multiplexed analogue component system described previously or with component television signals in digital form. Further, it may be used for broadcast links in general rather than public direct broadcast by satellite.

It is to be emphasised that this filter is a linear filter and thus cross-over effects present in non-linear filters are avoided.

The above filter could be altered to enhance only the horizontal resolution.

## Claims

1. A three dimensional transversal non-recursive filter for filtering a television video signal in component form in which the input signal is successively delayed and in which the output of the filter is formed by the summation of components obtained by weighting the variously delayed samples of the input signal, characterised in that the filter structure has alternate co-efficients which are zero, the non-zero co-efficients being in the form $k/2n$ where k and n are integers said co-efficients being used to weight the delayed samples of the input signal.

2. A filter according to claim 1 comprising first weighting means for applying selected ones of the co-efficients to samples from a plurality of lines of a first field of the input signal and for summing the weighted components to give a first sum signal, second weighting means for applying selected ones of the co-efficients to samples from a plurality of lines of a second field of the input signal and for summing the weighted components to give a second sum signal, third weighting means for applying selected ones of the co-efficients to samples from a plurality of lines of a third field of the input signal and for summing the weighted components to give a third sum signal, and means for combining the first, second and third sum signals to produce the filtered output.

3. A television transmission system wherein a filter according to claim 1 is included prior to the signal in component form being transmitted.

4. A receiver for a signal transmitted by a television transmission system according to claim 3, the receiver including a filter according to claim 1.

## Patentansprüche

1. Dreidimensionales, rücklauffreies Transversalfilter zum Filtern eines Fernsehvideosignals in Komponentenform, bei dem das Eingangssignal aufeinanderfolgend verzögert wird und der Ausgang des Filters durch die Summierung von Komponenten gebildet wird, die man durch Gewichtung der unterschiedlich verzögerten Proben des Eingangssignals erhält, dadurch gekennzeichnet, daß der Filteraufbau abwechselnde Koeffizienten hat, die Null sind, wobei die Nicht - Null - Koeffizienten die Form $k/2^n$ haben, wobei k und n ganze Zahlen sind und die genannten Koeffizienten dazu verwendet werden, die verzögerten Proben des Eingangssignals zu gewichten.

2. Filter nach Anspruch 1, enthaltend eine erste Gewichtungseinrichtung zum Zuführen von Ausgewählten der Koeffizienten zu Proben des Eingangssignals von einer Vielzahl von Zeilen eines ersten Teilbildes und zum Summieren der gewichteten Komponenten, um ein erstes Summensignal zu ergeben, eine zweite Gewichtungseinrichtung zum Zuführen von Ausgewählten der Koeffizienten zu Proben des Eingangssignals von einer Vielzahl von Zeilen eines zweiten Teilbildes und zum Summieren der gewichteten Komponenten, um ein zweites Summensignal zu ergeben, eine dritte Gewichtungseinrichtung zum Zuführen von Ausgewählten der Koeffizienten zu Proben des Eingangssignals von einer Mehrzahl von Zeilen eines dritten Teilbildes und zum Summieren der gewichteten Komponenten, um ein drittes Summensignal zu ergeben, und eine Einrichtung zum Kombinieren der ersten, zweiten und dritten Summensignale, um den gefilterten Ausgang zu erzeugen.

3. Fernsehübertragungssystem, bei dem ein Filter nach Anspruch 1 eingeschlossen ist, bevor das Signal im Komponentenform übertragen wird.

4. Empfänger für ein Signal, das von einem Fernsehübertragungssystem nach Anspruch 3 übertragen worden ist, wobei der Empfänger ein Filter nach Anspruch 1 enthält.

## Revendications

1. Filtre non récursif transversal tridimensionnel servant à filtrer un signal vidéo de télévision se présentant sous forme de composantes dans lequel le signal d'entrée est retardé successivement et dans lequel le signal de sortie est formé par l'addition de composantes obtenues par pondération d'échantillons diversement retardés du signal d'entrée, caractérisé en ce que la structure de filtre possède des coefficients alternés qui sont nuls, les coefficients non nuls étant de la forme $k/2^n$, où k et n sont des entiers, lesdits coefficients étant utilisés pour pondérer les échantillons retardés du signal d'entrée.

2. Filtre selon la revendication 1, comprenant un premier moyen de pondération qui applique certains, choisis, des coefficients à des échantillons venant de plusierus lignes d'une première trame de signal d'entrée et qui additionne les composantes pondérées afin de produire un premier signal d'addition, un deuxième moyen de pondération qui applique certains, choisis, des coefficients à des échantillons venant de plusieurs lignes d'une deuxième trame du signal d'entrée et qui additionne les composantes pondérées afin de former un deuxième signal d'addition, un troisième moyen de pondération qui applique certains, choisis, des coefficients à des échantillons venant de plusieurs lignes d'une troisième trame du signal d'entrée et qui additionne les composantes pondérées afin de produire un troisième signal d'addition, et un moyen qui combine les premier, deuxième et troisième signaux d'addition afin de produire le signal de sortie filtré.

3. Système de transmission de télévision où il est inclus un filtre selon la revendication 1 avant la transmission du signal sous forme de composantes.

4. Récepteur pour signal émis par un système d'émission de télévision selon la revendication 3, le récepteur comportant un filtre selon la revendication 1.

FIG. 1.

LINE SYNC WORD

64µs

LINE SYNC WORD

20µs CHROMINANCE

40µs LUMINANCE

CLAMPING PERIODS

CLAMPING PERIODS

FIG. 2.

INDOOR UNIT

12GHz MAC

DOWN CONVERTER

1GHz IF

FM DEMODU-LATOR

CCD VIDEO PROCESSOR

YUV

PAL CODER

AMPLITUDE MODULATOR

UHF

BASEBAND SPECTRUM

REPEAT SPECTRUM

ALIASING

AMPLITUDE

$f$ $f_S/2$ $f_S - f$ $f_S$ FREQ

*Fig.3.*

PREFILTER

BASEBAND SPECTRUM

$A$

$O$ $f_S/2$ FREQ

A/D CONVERSION & D/A CONVERSION

BASEBAND REPEAT

$A$

$O$ $f_S/2$ $f_S$ FREQ

POST-FILTER

$A$

$O$ $f_S/2$ FREQ

*Fig. 4.*

**Fig.5.**

**Fig.6.**

FIG. 7.

X – ODD FIELDS
O – EVEN FIELDS

FIG. 8.

FIG. 9.

FIG. 10.

INPUT

10

B,C,E

LINE DELAY

B,C,E

FIELD DELAY

G,H

LINE DELAY

N,A,D,F

LINE DELAY

G,H

FIELD DELAY

B,C,E

LINE DELAY

B,C,E

FILTERED OUTPUT

FIG. 11.

HORIZONTAL-TEMPORAL

HORIZONTAL-VERTICAL

25Hz

312cph

FIG. 12.